# FASCICULE DE BREVET EUROPEEN

(11) **EP 4 038 033 B1**
(45) Date de publication et mention de la délivrance du brevet: **10.04.2024**
(21) Numéro de dépôt: 20776209.7
(22) Date de dépôt: 30.09.2020
(51) Int. Cl.: C03C 8/04, B32B 17/10, C03C 8/14, C03C 17/00

(54) **PROCEDE D'OBTENTION D'UN VITRAGE BOMBE FEUILLETE**
VERFAHREN ZUR HERSTELLUNG EINER GEWÖLBTEN VERBUNDGLASSCHEIBE
METHOD FOR PRODUCING A CURVED LAMINATED GLAZING

(30) Priorité: 30.09.2019 FR 1910774
(43) Date de publication de la demande: 10.08.2022
(73) Titulaire: Saint-Gobain Glass France, 92400 Courbevoie (FR)
(72) Inventeur: JAMART, Juliette, 60200 COMPIEGNE (FR); DUMOTIER, Leila, 60280 MARGNY LES COMPIEGNE (FR)
(74) Mandataire: Saint-Gobain Recherche
(86) Numéro de dépôt international: PCT/EP2020/077393
(87) Numéro de publication internationale: WO 2021/064035

(56) Documents cités:
- EP-A1- 3 450 193
- WO-A1-2005/068381
- WO-A1-2018/115090
- US-A1- 2018 141 858

## Description

L'invention se rapporte au domaine des vitrages feuilletés. Elle concerne plus particulièrement un procédé mettant en œuvre un bombage et permettant d'obtenir des produits de meilleure qualité en termes de propriétés optiques.

Les vitrages feuilletés sont des vitrages comprenant deux feuilles de verre liées adhésivement entre elles par un intercalaire thermoplastique. Ce dernier permet en particulier de retenir les éclats de verre en cas de casse, mais apporte aussi d'autres fonctionnalités, en particulier en termes de résistance à l'effraction ou d'amélioration des propriétés acoustiques. De tels vitrages sont notamment utilisés comme pare-brise de véhicules automobiles et sont alors bombés. La feuille de verre disposée du côté convexe, dite feuille externe car destinée à être positionnée à l'extérieur du véhicule, comprend une face dite « face 1 » (à l'extérieur du véhicule) et une face 2 en contact avec l'intercalaire de feuilletage, et la feuille de verre disposée du côté concave, dite feuille interne, comprend une face 3 en contact avec l'intercalaire de feuilletage et une face 4 destinée à être positionnée à l'intérieur du véhicule.

Ces vitrages feuilletés comprennent généralement des revêtements d'émail, qui permettent par exemple de dissimuler des joints de montage du vitrage dans une baie de carrosserie d'un véhicule et également de les protéger contre le rayonnement ultraviolet. L'émail, souvent disposé en face 2 ou en face 4, est généralement sous forme d'une bande disposée à la périphérie de la feuille de verre.

Le document WO 2005/068381 décrit un procédé d'obtention d'un vitrage bombé feuilleté comprenant un revêtement d'émail.

L'émail comprend une fritte de verre et des pigments, souvent des pigments noirs. Déposé généralement par sérigraphie il est ensuite cuit lors du bombage, lequel soumet les feuilles de verre des températures d'au moins 550°C, voire d'au moins 600°C. Ce traitement est mis en oeuvre dans des dispositifs de chauffage tels que des fours, dans lesquels les feuilles de verre sont chauffées par convection et rayonnement.

Il a été observé que les vitrages feuilletés bombés présentent dans certains cas des distorsions optiques, parfois appelées « *burn lines* », à proximité de la zone émaillée.

Ces distorsions sont particulièrement gênantes lorsqu'elles se situent près des zones, dites « zones caméra », au travers desquelles des capteurs optiques doivent capter la lumière ou des images. C'est le cas par exemple des pare-brise munis de capteurs et/ou de caméras, par exemple des capteurs de pluie ou de luminosité, ou des caméras d'aide à la conduite. Ces capteurs ou caméras sont situés à l'intérieur du véhicule, contre la face 4 du vitrage, par exemple dans la zone où le rétroviseur intérieur est fixé au pare-brise. Un revêtement d'émail est généralement disposé dans cette zone afin de dissimuler et protéger l'adhésif servant à fixer le rétroviseur intérieur, mais cette zone émaillée doit ménager une petite fenêtre de transmission non émaillée de façon à ce que la lumière puisse atteindre les capteurs. Il est important que cette zone caméra soit exempte de distorsions optiques afin d'éviter que l'image captée soit déformée et le cas échéant mal analysée.

Il est apparu que de telles distorsions était dues au fait que l'émail, notamment lorsqu'il est noir, absorbe fortement le rayonnement infrarouge, plus que le verre nu. Il en résulte, lors du bombage, de fortes différences de températures entre d'une part les zones revêtues par l'émail (zones émaillées) et d'autre part les zones de verre non revêtues par l'émail (zones non émaillées), ces différences de température étant à l'origine des distorsions observées.

Le document WO 2018/115090 décrit un vitrage bombé feuilleté utilisant un intercalaire thermoplastique opacifié dans la zone caméra afin d'éviter les distorsions produites par l'émail.

L'invention a pour but d'obvier à ces inconvénients en réduisant ou supprimant lesdites distorsions optiques.

A cet effet, l'invention a pour objet un procédé d'obtention d'un vitrage bombé feuilleté possédant un côté concave et un côté convexe, ledit vitrage comprenant une feuille de verre, dite interne, disposée du côté concave du vitrage et liée adhésivement au moyen d'un intercalaire thermoplastique avec une feuille de verre, dite externe, disposée du côté convexe du vitrage, ledit procédé comprenant les étapes suivantes :
- le dépôt d'un revêtement d'émail sur une partie d'une première face d'une première feuille de verre de sorte à créer au moins une zone émaillée et au moins une zone non émaillée,
- le dépôt d'une couche sacrificielle absorbant une partie du rayonnement infrarouge sur une partie, dite zone sacrificielle, d'une première face d'une deuxième feuille de verre,
- le bombage simultané de la première et de la deuxième feuille de verre, les feuilles de verre étant disposées lors du bombage de sorte que l'une parmi les première et deuxième feuilles de verre est disposée sur l'autre feuille de verre, les premières faces respectives de chaque feuille de verre sont orientées vers le côté concave du vitrage et la zone sacrificielle est disposée au moins au droit d'au moins une partie d'une zone émaillée,
- l'élimination de ladite couche sacrificielle, soit au cours du bombage soit après l'étape de bombage,
- le feuilletage de la première et de la deuxième feuille de verre au moyen d'un intercalaire thermoplastique.

Dans la plupart des cas, correspondant aux procédés de bombage les plus courants, les premières faces respectives de chaque feuille de verre seront tournées vers le haut lors du bombage. De même, le plus souvent, le feuilletage sera réalisé de sorte que la feuille de verre disposée au-dessus lors du bombage est la feuille interne.

Selon un premier mode de réalisation, la feuille de verre interne est la première feuille de verre. Dans ce cas, la feuille de verre émaillée sera généralement disposée au-dessus de la deuxième feuille de verre lors du bombage et le revêtement d'émail sera disposé en face 4 du vitrage final, par conséquent destiné à être en contact avec l'intérieur du véhicule dans lequel le vitrage sera monté.

Selon un deuxième mode de réalisation, c'est la feuille de verre externe qui est la première feuille de verre. Dans ce cas, la deuxième feuille de verre sera généralement disposée au-dessus de la feuille de verre émaillée lors du bombage et le revêtement d'émail sera disposé en face 2 du vitrage final, donc en contact avec l'intercalaire de feuilletage.

Dans tous les cas, dans le vitrage final, le revêtement d'émail sera généralement disposé en face 2, donc sur la face interne de la feuille externe ou en face 4, donc sur la face interne de la feuille interne.

L'ensemble de ce qui suit vaut pour ces deux modes de réalisation, sauf précision contraire.

Chaque feuille de verre est de préférence plane avant l'étape de bombage. Le verre de la première et/ou de la deuxième feuille de verre est typiquement un verre silico-sodo-calcique, mais d'autres verres, par exemple des borosilicates ou des aluminosilicates peuvent également être employés. Au moins une feuille de verre est de préférence obtenue par flottage, c'est-à-dire par un procédé consistant à déverser du verre fondu sur un bain d'étain en fusion.

Au moins une feuille de verre peut être claire ou teintée, par exemple en vert, bleu, gris ou bronze. Le choix est fait en fonction de l'utilisation du vitrage final. Dans le cas par exemple d'un pare-brise de véhicule automobile, la transmission lumineuse du vitrage (illuminant A, observateur de référence CIE-1931) est de préférence d'au moins 70%, voire 75% ; au moins une feuille de comprend alors de préférence une teneur en oxyde de fer (exprimée sous la forme Fe₂O₃) comprise entre 0,5 et 0,9% en poids.

Chaque feuille de verre présente de préférence une épaisseur comprise dans un domaine allant de 0,7 à 6 mm, notamment de 1 à 5 mm, particulièrement de 2 à 4 mm. Le vitrage présente de préférence une surface d'au moins 1 m².

Le revêtement d'émail est de préférence déposé à partir d'une composition d'émail fluide comprenant une fritte de verre, des pigments et un médium organique. Ce dernier est éliminé lors de l'étape de bombage, laquelle permet de consolider le revêtement d'émail, voire le cas échéant lors d'un traitement de pré-cuisson de l'émail. Après cuisson, le revêtement d'émail comprend donc des pigments dans une matrice essentiellement vitreuse.

La fritte de verre ou la matrice vitreuse est de préférence à base d'un borosilicate de bismuth et/ou de zinc. Les pigments comprennent de préférence un ou plusieurs oxydes choisis parmi les oxydes de chrome, de cuivre, de fer, de manganèse, de cobalt, de nickel. Il peut s'agir à titre d'exemple de chromates de cuivre et/ou de fer. L'épaisseur du revêtement d'émail, après l'étape de traitement thermique, est de préférence comprise dans un domaine allant de 5 à 50 µm, notamment de 10 à 40 µm.

La zone émaillée représente de préférence entre 2 et 25%, notamment entre 3 et 20%, voire entre 5 et 15% de la surface de la face revêtue. La zone émaillée se présente de préférence sous la forme d'une bande périphérique. Par « bande périphérique », on entend une bande refermée sur elle-même qui, de chaque point de la périphérie de la feuille de verre, s'étend vers l'intérieur de la feuille de verre sur une certaine largeur, souvent variable selon la position, typiquement comprise entre 1 et 30 cm.

Le dépôt du revêtement d'émail est de préférence réalisé par sérigraphie d'une composition d'émail fluide comprenant une fritte de verre, des pigments et un médium organique. Pour ce faire, on dépose, notamment à l'aide d'un racle, la composition d'émail sur la feuille de verre au travers de mailles d'un écran de sérigraphie. Les mailles de l'écran sont obturées dans la partie correspondant aux zones de la feuille de verre que l'on ne veut pas revêtir, de sorte que la composition d'émail ne peut passer au travers de l'écran que dans les zones à imprimer, selon un motif prédéfini.

D'autres techniques de dépôt telles que les techniques d'impression numérique (par exemple impression par jet d'encre ou par transfert sous l'effet d'un rayonnement laser) sont également possibles.

Avant cuisson, le revêtement d'émail présente une épaisseur de préférence comprise entre 10 et 30 µm, notamment entre 15 et 25 µm. Après cuisson, l'épaisseur du revêtement d'émail est de préférence comprise entre 5 et 15 µm, notamment entre 7 et 13 µm.

L'émail est de préférence noir, et présente avantageusement une coordonnée colorimétrique L* en réflexion côté émail inférieure à 10, notamment à 5, et même à 3.

La couche sacrificielle est déposée sur la deuxième feuille de verre dans une zone sacrificielle qui lors du bombage est disposée au moins au droit (autrement dit en regard) d'au moins une partie d'une zone émaillée.

La présence de cette couche sur la deuxième feuille de verre permet de compenser les différences de température apparaissant lors du bombage à la limite entre les zones émaillées et les zones non émaillées de la première feuille de verre, et ainsi d'éviter la formation des distorsions optiques précitées.

La couche sacrificielle peut en outre être aussi disposée au droit (autrement dit en regard) d'une partie d'une zone non-émaillée, en particulier adjacente à une zone émaillée.

La couche sacrificielle peut être disposée au droit d'au moins 5%, notamment d'au moins 10%, voire d'au moins 20%, ou encore d'au moins 30% ou 40% de la zone émaillée, et même d'au moins 50% ou 60% de la zone émaillée.

Selon un exemple, la zone sacrificielle est disposée, au moins ou exactement, au droit de la totalité de la zone émaillée. La zone sacrificielle est par exemple disposée, au droit de la totalité de la zone émaillée et d'une partie de la zone non-émaillée adjacente à la zone émaillée.

Selon un autre exemple, la zone sacrificielle est disposée au droit d'une zone caméra, englobant donc une zone non émaillée entourée par une zone émaillée et une partie de cette dernière autour de la zone non émaillée. Comme indiqué précédemment, on entend par zone caméra une zone du vitrage au travers de laquelle, dans le vitrage final, des capteurs doivent capter la lumière ou les images, ainsi que la zone émaillée adjacente.

Dans ce cas, la zone sacrificielle sera généralement disposée au droit d'une zone couvrant de 0,5 à 10%, voire 1 à 5% de la zone émaillée. La zone sacrificielle sera aussi, de préférence, disposée au droit de la zone non-émaillée entourée par cette zone émaillée.

La zone caméra, dans sa partie transparente, présente de préférence une forme trapézoïdale. La surface de la partie transparente de la zone caméra est de préférence comprise entre 5 et 300 cm², notamment entre 10 et 250 cm².

La couche sacrificielle est de préférence déposée par sérigraphie, impression numérique, par tampographie, au rouleau, au rideau ou par pulvérisation.

Les procédés de sérigraphie, d'impression numérique, ou encore de tampographie, permettent de ne déposer la couche sacrificielle que sur des zones déterminées. Ces techniques de dépôt localisé sont particulièrement utiles par exemple lorsque l'invention a pour but d'éviter les distorsions optiques au niveau d'une zone caméra puisque dans ce cas seule une petite zone de la feuille de verre est concernée par le procédé selon l'invention.

L'épaisseur de la couche sacrificielle est de préférence comprise entre 100 nm et 80 µm, notamment entre 1 µm et 30 µm, voire entre 5 µm et 20 µm.

La couche sacrificielle absorbe une partie du rayonnement infrarouge. Elle comprend avantageusement des pigments, notamment des pigments noirs, ou du noir de carbone. Les pigments comprennent de préférence un ou plusieurs oxydes choisis parmi les oxydes de chrome, de cuivre, de fer, de manganèse, de cobalt, de nickel.

La couche sacrificielle peut, alternativement ou cumulativement, réfléchir une partie du rayonnement infrarouge. Elle peut alors comprendre des pigments réfléchissant le rayonnement infrarouge, notamment des pigments de dioxyde de titane.

De manière à ce que la couche sacrificielle puisse résister à diverses manipulations ou manutentions, par exemple à un convoyage ou au contact d'outils, la couche sacrificielle comprend de préférence une résine. La résine joue alors le rôle de liant permettant de fixer temporairement la couche à la deuxième feuille de verre.

Selon un mode de réalisation, la couche sacrificielle comprend une résine et des composés minéraux réfractaires, par exemple des pigments ou du noir de carbone, et l'élimination de la couche sacrificielle est réalisée après l'étape de bombage, notamment par lavage et/ou brossage. Par « réfractaires », on entend que ces composés ne fondent pas et ne se ramollissent lors du bombage.

Selon un autre mode de réalisation, la couche sacrificielle comprend une résine et des composés minéraux combustibles, l'élimination de la couche sacrificielle étant réalisée simultanément avec le bombage. Dans ce cas, les composés combustibles sont éliminés par combustion lors du bombage. Par minéraux « combustibles », on entend en effet que ces composés sont capables de brûler lors du bombage.

Dans les deux cas, la résine sera généralement éliminée soit pendant le bombage, soit le cas échéant, avant le bombage, par un traitement de pré-cuisson de l'émail.

La teneur en résine dans la couche sacrificielle est de préférence d'au moins 10% en poids, ou d'au moins 20% et/ou d'au plus 60% en poids.

La résine peut notamment être choisie parmi les résines acryliques, les résines époxydes, les résines alkydes, les résines polyuréthane, seules ou en mélange, en phase aqueuse ou solvant. Des copolymères de ces différents polymères sont également utilisables. La résine peut être en phase aqueuse ou solvant, avec un taux d'extrait sec typiquement entre 20 et 80%, notamment entre 30 et 70% en poids.

La résine peut être une résine réticulant sous rayonnement ultraviolet, notamment à base de (méth)acrylates et éventuellement d'un photo-initiateur ; résine sans solvant, ou éventuellement en phase aqueuse ou solvant. La résine peut ne pas être réticulée si la feuille de verre n'a pas besoin d'être manipulée entre l'application de la couche sacrificielle et le traitement thermique. Dans le cas contraire, il est préférable de prévoir une étape de séchage par rayonnement ultraviolet.

La résine peut être un latex, c'est-à-dire sous forme de dispersion ou d'émulsion aqueuse. Le séchage peut avoir lieu à l'air ou au four, mais l'étape de séchage peut être omise si la feuille de verre n'a pas besoin d'être manipulée entre l'application de la couche sacrificielle et le traitement thermique.

La résine peut être une résine thermoplastique, par exemple une résine thermofusible (hot-melt) ou un élastomère thermoplastique, par exemple un copolymère SEBS (polystyrène-b-poly(éthylène-butylène)-b-polystyrène) .

La résine peut être la résine d'un médium organique pour composition d'émail.

Le bombage met de préférence en oeuvre des températures de préférence comprises entre 600 et 750°C, notamment entre 620 et 700°C. Si besoin, le bombage peut être suivi d'un traitement de trempe thermique incluant en outre un refroidissement forcé et rapide de la surface du verre, par exemple à l'aide de buses d'air, de manière à créer des contraintes superficielles de compression qui améliorent la résistance mécanique de la feuille de verre.

Le bombage peut être réalisé de manière connue, par exemple par gravité (le verre se déformant sous son propre poids) ou par pressage. Lors du bombage, la feuille de verre intérieure (selon les cas la première ou la deuxième feuille de verre) est souvent disposée au-dessus de la feuille de verre extérieure (selon les cas la deuxième ou la première feuille de verre). Pour éviter qu'elles ne collent l'une à l'autre pendant le bombage, les feuilles de verre sont de préférence maintenues à distance en disposant entre elles une poudre intercalaire assurant un espace de quelques dizaines de micromètres, typiquement de 20 à 50 µm. La poudre intercalaire est par exemple à base de carbonate de calcium et/ou de magnésium.

Le procédé peut en outre comprendre, avant l'étape de bombage, un traitement de pré-cuisson de l'émail. Ce traitement met alors en oeuvre des températures de préférence comprises entre 550 et 650°C, notamment entre 560 et 600°C. Le traitement de pré-cuisson est en particulier utile pour développer les propriétés anti-adhésion de certains émaux. Ce mode de réalisation est particulièrement appréciable lorsque le premier revêtement est un émail destiné à être en face 2 du vitrage feuilleté, ledit émail se trouvant alors généralement en contact avec la deuxième feuille de verre du vitrage feuilleté pendant le traitement de bombage.

Comme indiqué précédemment, le procédé peut comprendre, après l'étape de bombage, une étape de lavage et/ou de brossage. Cette étape permet d'éliminer d'éventuels composés ou résidus organiques et/ou minéraux de la couche sacrificielle, par exemple des pigments.

Le procédé comprend, après l'étape de bombage, une étape de feuilletage, dans laquelle les feuilles de verre sont liées l'une à l'autre au moyen d'un intercalaire thermoplastique.

Le feuilletage peut être réalisé de manière connue par un traitement en autoclave, par exemple à des températures de 110 à 160°C et sous une pression allant de 10 à 15 bars. Préalablement au traitement en autoclave, l'air emprisonné entre les feuilles de verre et l'intercalaire de feuilletage peut être éliminé par calandrage ou par dépression.

L'intercalaire de feuilletage comprend de préférence au moins une feuille de polyvinylacétal, notamment de polyvinylbutyral (PVB).

L'intercalaire de feuilletage peut être teinté ou non-teinté afin si nécessaire de réguler les propriétés optiques ou thermiques du vitrage. L'intercalaire de feuilletage peut avantageusement posséder des propriétés d'absorption acoustique afin d'absorber les sons d'origine aérienne ou solidienne. Il peut notamment être constitué à cet effet de trois feuilles polymériques, dont deux feuilles de PVB dites externes encadrant une feuille polymérique interne, éventuellement en PVB, de dureté plus faible que celle des feuilles externes. L'intercalaire de feuilletage peut également posséder des propriétés d'isolation thermique, en particulier de réflexion du rayonnement infrarouge. Il peut à cet effet comprendre un revêtement de couches mince à faible émissivité, par exemple un revêtement comprenant une couche mince d'argent ou un revêtement alternant des couches diélectriques d'indices de réfraction différents, déposé sur une feuille de PET interne encadrée par deux feuilles de PVB externes.

L'épaisseur de l'intercalaire de feuilletage est généralement comprise dans un domaine allant de 0,3 à 1,5 mm, notamment de 0,5 à 1 mm. L'intercalaire de feuilletage peut présenter une épaisseur plus faible sur un bord du vitrage qu'au centre du vitrage afin d'éviter la formation d'une double image en cas d'utilisation d'un système de vision tête haute, dit HUD (head-up display).

Selon un mode de réalisation, on dispose un capteur sur la feuille de verre interne en regard d'une zone non-émaillée entourée par une partie de la zone émaillée (zone caméra). Le capteur est par exemple une caméra (notamment visible et/ou infrarouge, en particulier thermique) ou un Lidar.

Le vitrage feuilleté bombé obtenu comprend deux feuilles de verre liées adhésivement au moyen d'un intercalaire thermoplastique, un revêtement d'émail (notamment noir) étant avantageusement disposé à la périphérie d'une des feuilles de verre, en face 2 ou en face 4 du vitrage. L'émail périphérique permet de dissimuler et protéger les joints et adhésifs permettant la fixation du vitrage à la baie de carrosserie ou du rétroviseur intérieur au vitrage. De préférence, le pare-brise comprend au moins un capteur et la bande d'émail périphérique comprend une fenêtre de transmission non émaillée en regard dudit capteur.

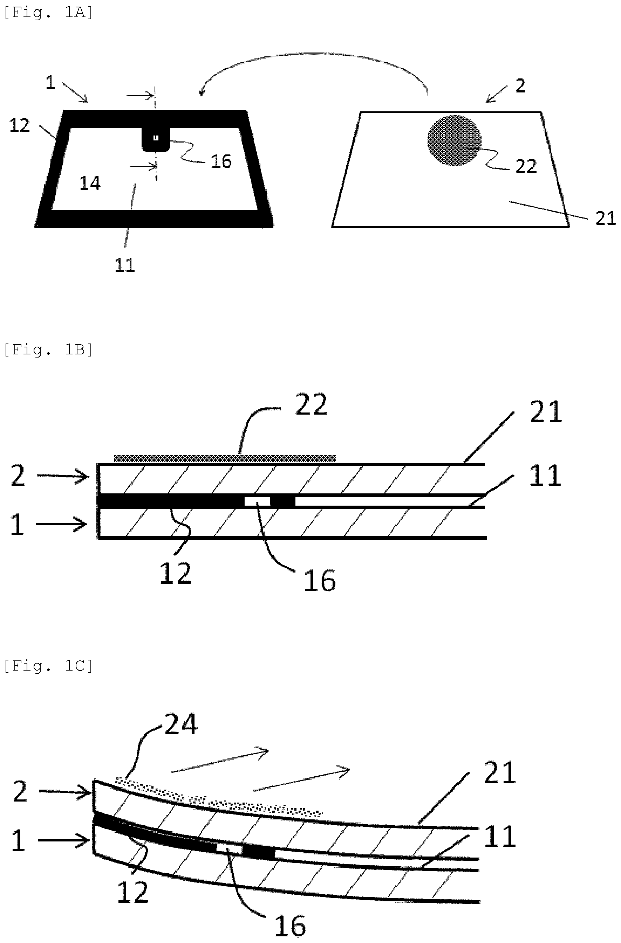

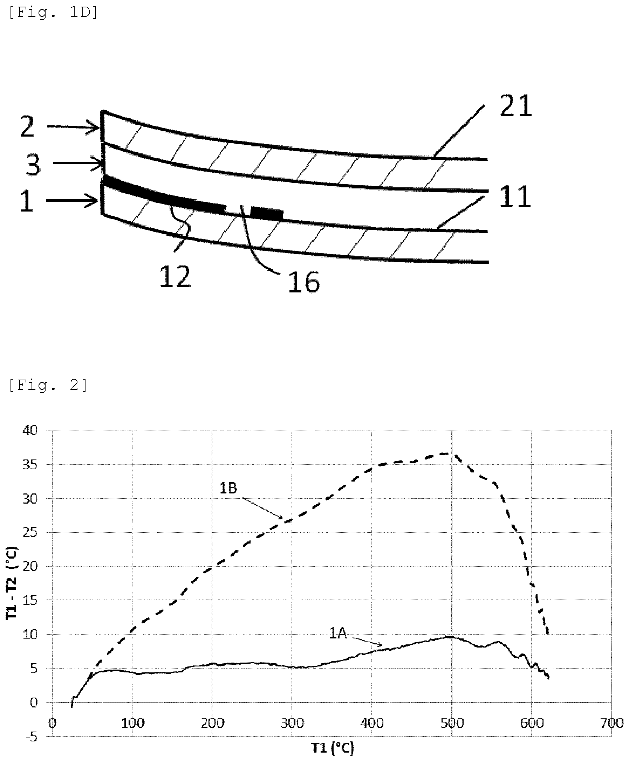

Les exemples qui suivent illustrent l'invention de manière non-limitative, en lien avec les figures 1 et 2 annexées.

Les figures 1A à 1D illustrent schématiquement un mode de réalisation du procédé de l'invention. Dans ce mode de réalisation, on cherche à réduire les distorsions optiques dans une zone caméra d'un pare-brise de véhicule automobile.

[Fig. 1A] est une vue schématique de dessus de la première et de la deuxième feuille de verre avant qu'elles soient assemblées en vue du bombage.

La première feuille de verre 1 est revêtue sur sa première face 11 d'une bande périphérique d'émail noir 12 entourant une zone non-émaillée 14 (zone centrale de la feuille de verre) et créant, dans la partie centrale supérieure de la feuille de verre, une zone caméra 16, comprenant une partie transparente, non-émaillée, entourée d'une partie émaillée. Le dépôt d'émail est par exemple réalisé par sérigraphie. A ce stade, l'émail n'est pas encore cuit.

La deuxième feuille de verre 2 est revêtue sur sa première face 21 d'une couche sacrificielle 22, disposée dans une zone sacrificielle destinée à être située au droit (en regard) de la zone caméra 16 lors de l'assemblage des feuilles de verre en vue du bombage. Dans l'exemple la couche sacrificielle s'étend à la fois au droit de la partie transparente, donc non-émaillée, de la zone caméra 16 et au droit de la partie émaillée située autour de cette partie transparente.

La couche sacrificielle 22 comprend par exemple une résine et des pigments noirs.

[Fig. 1B] est une vue schématique en coupe, selon le plan de coupe représenté en figure 1A, d'une partie des première et deuxième feuilles de verre assemblées en vue du bombage. La deuxième feuille de verre 2 est ici disposée sur la première feuille de verre 1. Dans le vitrage final la deuxième feuille de verre 2 sera donc la feuille de verre interne et la première feuille de verre 1 sera donc la feuille de verre externe, le revêtement d'émail se trouvant alors en face 2 du vitrage. Comme indiqué précédemment, la disposition inverse est également possible, selon que l'émail est destiné à être en face 2 ou 4 du vitrage feuilleté final. La poudre intercalaire généralement présente entre les deux feuilles de verre n'est pas représentée ici.

Les premières faces 11 et 21 sont orientées vers ce qui deviendra pendant le bombage le côté concave du vitrage. S'agissant ici d'un bombage par gravité, les premières faces 11 et 21 sont tournées vers le haut. D'autres dispositions sont possibles, selon le procédé de bombage utilisé.

[Fig. 1C] est une vue en coupe des première et deuxième feuilles de verre à l'issue du bombage. Dans l'exemple de couche sacrificielle donné, la combustion de la résine a laissé sur la première face 21 de la deuxième feuille de verre 2 les pigments noirs, représentés par la référence 24, qui peuvent être retirés de la face 21 par brossage.

[Fig. 1D] est une vue en coupe du vitrage feuilleté final. Après le bombage, les deux feuilles de verre sont séparées puis feuilletées avec un intercalaire thermoplastique 3, typiquement en PVB.

Les figures 1A à 1D n'illustrent qu'un mode de réalisation du procédé selon l'invention. D'autres modes sont évidemment possibles, par exemple le dépôt de la couche sacrificielle 22 peut être réalisé au droit de toute la zone émaillée 12 de manière à éliminer les distorsions optiques présentes à l'interface de la zone émaillée 12 et de la zone non-émaillée 14.

L'exemple de réalisation qui suit démontre les avantages de l'invention.

Une première feuille de verre a été revêtue par sérigraphie, sur une moitié de sa première face d'un revêtement d'émail noir. Une deuxième feuille de verre a ensuite été disposée au-dessus de la première feuille de verre, l'ensemble étant ensuite traité thermiquement en étant placé pendant une durée de 180 secondes dans un four chauffé à une température de 710°C. L'évolution de la température du verre (mesurée par des thermocouples situés sur la première feuille de verre) dans la zone émaillée (T1) et dans la zone non-émaillée (T2) a été mesurée.

Dans l'essai 1A la première face de la deuxième feuille de verre (tournée vers le haut pendant le traitement thermique) a été préalablement revêtue par sérigraphie d'une composition constituée d'un médium organique et de pigments minéraux noirs à base d'oxydes de cuivre (37% en masse), de fer (17% en masse) et de manganèse (46% en masse). L'épaisseur humide était de 15 µm. Dans cet exemple, le traitement thermique a permis d'éliminer la couche sacrificielle par combustion de la résine, laissant les pigments à la surface de la deuxième feuille de verre, qui ont ensuite été éliminés par lavage.

Dans l'essai 1B (comparatif), aucune couche sacrificielle n'a été déposée.

[Fig. 2] présente la différence de température T1 - T2 en fonction de la température T1.

Les résultats montrent que la couche sacrificielle sur la deuxième feuille de verre permet de réduire fortement la différence de températures à haute température entre les zones émaillées et non émaillées, puisqu'elle est au maximum de 10°C en valeur absolue dans le cas de l'exemple 1A, tandis que cette différence peut aller jusqu'à plus de 35°C en l'absence de couche sacrificielle.

## Revendications

1. Procédé d'obtention d'un vitrage bombé feuilleté possédant un côté concave et un côté convexe, ledit vitrage comprenant une feuille de verre, dite interne, disposée du côté concave du vitrage et liée adhésivement au moyen d'un intercalaire thermoplastique (3) avec une feuille de verre, dite externe, disposée du côté convexe du vitrage, ledit procédé comprenant les étapes suivantes :
- le dépôt d'un revêtement d'émail sur une partie d'une première face (11) d'une première feuille de verre (1) de sorte à créer au moins une zone émaillée (12) et au moins une zone non émaillée (14, 16),
- le dépôt d'une couche sacrificielle (22) absorbant une partie du rayonnement infrarouge sur une partie, dite zone sacrificielle, d'une première face (21) d'une deuxième feuille de verre (2),
- le bombage simultané de la première et de la deuxième feuille de verre (1, 2), les feuilles de verre étant disposées lors du bombage de sorte que l'une parmi les première et deuxième feuilles de verre est disposée sur l'autre feuille de verre, les premières faces respectives (11, 21) de chaque feuille de verre (1, 2) sont orientées vers le côté concave du vitrage et la zone sacrificielle (22) est disposée au moins au droit d'au moins une partie d'une zone émaillée (12),
- l'élimination de ladite couche sacrificielle (22), soit au cours du bombage soit après l'étape de bombage,
- le feuilletage de la première (1) et de la deuxième (2) feuille de verre au moyen d'un intercalaire thermoplastique (3) .

2. Procédé selon la revendication 1, dans lequel la feuille de verre interne est la première feuille de verre (1) .

3. Procédé selon la revendication 1, dans lequel la feuille de verre externe est la première feuille de verre (1) .

4. Procédé selon l'une des revendications précédentes, tel que la zone émaillée (12) se présente sous la forme d'une bande périphérique.

5. Procédé selon l'une des revendications précédentes, dans lequel le revêtement d'émail est déposé à partir d'une composition d'émail fluide comprenant une fritte de verre, des pigments et un médium organique.

6. Procédé selon l'une des revendications précédentes, dans lequel la zone sacrificielle (12) est disposée au droit d'une zone caméra (16).

7. Procédé selon l'une des revendications précédentes, dans lequel la couche sacrificielle est déposée par sérigraphie, impression numérique, par tampographie, au rouleau, au rideau ou par pulvérisation.

8. Procédé selon l'une des revendications précédentes, tel que la couche sacrificielle (22) comprend des pigments, notamment des pigments noirs, ou du noir de carbone.

9. Procédé selon l'une des revendications précédentes, tel que la couche sacrificielle (22) comprend une résine et des composés minéraux réfractaires, l'élimination de la couche sacrificielle (22) étant réalisée après l'étape de bombage, notamment par lavage et/ou brossage.

10. Procédé selon l'une des revendications 1 à 8, tel que la couche sacrificielle (22) comprend une résine et des composés minéraux combustibles, l'élimination de la couche sacrificielle (22) étant réalisée simultanément avec le bombage.

11. Procédé selon l'une des revendications précédentes, comprenant en outre, avant l'étape de bombage, un traitement de pré-cuisson de l'émail (12).

12. Procédé selon l'une des revendications précédentes, tel que le vitrage est un pare-brise de véhicule automobile.

13. Procédé selon l'une des revendications précédentes, dans lequel on dispose au moins un capteur sur la feuille de verre interne en regard d'une zone non-émaillée (16) entourée par une partie de la zone émaillée (12).

14. Procédé selon la revendication précédente, dans lequel ledit au moins un capteur est une caméra, notamment visible et/ou infrarouge, en particulier thermique, ou un Lidar.

## Patentansprüche

1. Verfahren zum Gewinnen einer gewölbten Verbundverglasung mit einer konkaven und einer konvexen Seite, die Verglasung umfassend eine innere Glasscheibe, die auf der konkaven Seite der Verglasung angeordnet ist und mittels einer thermoplastischen Zwischenlage (3) mit einer äußeren Glasscheibe, die auf der konvexen Seite der Verglasung angeordnet ist, klebend verbunden ist, das Verfahren umfassend die folgenden Schritte:
- Aufbringen einer Emailbeschichtung auf einen Teil einer ersten Fläche (11) einer ersten Glasscheibe (1), um mindestens einen emaillierten Bereich (12) und mindestens einen nicht emaillierten Bereich (14, 16) zu erzeugen,
- Aufbringen einer Opferschicht (22), die einen Teil der Infrarotstrahlung absorbiert, auf einen Teil, den sogenannten Opferbereich, einer ersten Fläche (21) einer zweiten Glasscheibe (2),
- gleichzeitiges Wölben der ersten und der zweiten Glasscheibe (1, 2), wobei die Glasscheiben beim Wölben angeordnet werden, sodass eine der ersten und der zweiten Glasscheibe auf der anderen Glasscheibe angeordnet ist, die jeweiligen ersten Flächen (11, 21) jeder Glasscheibe (1, 2) zu der konkaven Seite der Verglasung hin ausgerichtet sind, und der Opferbereich (22) mindestens direkt unter mindestens einem Teil eines emaillierten Bereichs (12) angeordnet ist,
- Entfernen der Opferschicht (22), entweder während des Wölbens oder nach dem Schritt des Wölbens,
- Laminieren der ersten (1) und der zweiten (2) Glasscheibe mittels einer thermoplastischen Zwischenlage (3).

2. Verfahren nach Anspruch 1, wobei die innere Glasscheibe die erste Glasscheibe (1) ist.

3. Verfahren nach Anspruch 1, wobei die äußere Glasscheibe die erste Glasscheibe (1) ist.

4. Verfahren nach einem der vorstehenden Ansprüche, wobei sich der emaillierte Bereich (12) in Form eines umlaufenden Streifens darstellt.

5. Verfahren nach einem der vorstehenden Ansprüche, bei dem die Emailbeschichtung aus einer flüssigen Emailzusammensetzung aufgebracht wird, umfassend eine Glasfritte, Pigmente und ein organisches Medium.

6. Verfahren nach einem der vorstehenden Ansprüche, bei dem der Opferbereich (12) direkt unter einem Kamerabereich (16) angeordnet ist.

7. Verfahren nach einem der vorstehenden Ansprüche, bei dem die Opferschicht durch Siebdruck, Digitaldruck, durch Tampondruck, mit der Walze, mit dem Vorhang oder durch Sprühen aufgebracht wird.

8. Verfahren nach einem der vorstehenden Ansprüche, wobei die Opferschicht (22) Pigmente, insbesondere schwarze Pigmente, oder Ruß umfasst.

9. Verfahren nach einem der vorstehenden Ansprüche, wobei die Opferschicht (22) ein Harz und feuerfeste mineralische Verbindungen umfasst, wobei die Entfernung der Opferschicht (22) nach dem Schritt des Wölbens umgesetzt wird, insbesondere durch Waschen und/oder Bürsten.

10. Verfahren nach einem der Ansprüche 1 bis 8, wobei die Opferschicht (22) ein Harz und brennbare mineralische Verbindungen umfasst, wobei die Entfernung der Opferschicht (22) gleichzeitig mit dem Wölben umgesetzt wird.

11. Verfahren nach einem der vorstehenden Ansprüche, ferner umfassend vor dem Schritt des Wölbens eine Vorbrennbehandlung des Emails (12).

12. Verfahren nach einem der vorstehenden Ansprüche, wobei die Verglasung eine Windschutzscheibe eines Kraftfahrzeugs ist.

13. Verfahren nach einem der vorstehenden Ansprüche, wobei mindestens ein Sensor auf der inneren Glasscheibe gegenüber einem nicht emaillierten Bereich (16) angeordnet wird, der von einem Teil des emaillierten Bereichs (12) umgeben ist.

14. Verfahren nach dem vorstehenden Anspruch, wobei der mindestens eine Sensor eine Kamera, insbesondere eine Sicht- und/oder Infrarotkamera, im Besonderen eine Wärmebildkamera, oder ein Lidar ist.

## Claims

1. A method for obtaining a curved laminated glazing unit possessing a concave side and a convex side, said glazing unit comprising a glass sheet, called the internal glass sheet, disposed to the concave side of the glazing unit and bonded adhesively by means of a thermoplastic interlayer (3) with a glass sheet, called the external glass sheet, disposed to the convex side of the glazing unit, said method comprising the following steps:
- applying an enamel coating to a part of a first face (11) of a first glass sheet (1) so as to create at least one enameled zone (12) and at least one unenameled zone (14, 16),
- applying a sacrificial layer (22) absorbing a part of the infrared radiation to a part, called the sacrificial zone, of a first face (21) of a second glass sheet (2),
- simultaneously bending the first and second glass sheets (1, 2), the glass sheets being disposed during bending so that one of the first and second glass sheets is disposed on the other glass sheet, the respective first faces (11, 21) of each glass sheet (1, 2) are oriented toward the concave side of the glazing unit, and the sacrificial zone (22) is disposed at least in line with at least one part of an enameled zone (12),
- removing said sacrificial layer (22), either during bending or after the bending step,
- laminating the first (1) and second (2) glass sheets by means of a thermoplastic interlayer (3).

2. The method as claimed in claim 1, wherein the internal glass sheet is the first glass sheet (1).

3. The method as claimed in claim 1, wherein the external glass sheet is the first glass sheet (1).

4. The method as claimed in one of the preceding claims, such that the enameled zone (12) takes the form of a peripheral strip.

5. The method as claimed in one of the preceding claims, wherein the enamel coating is applied from a fluid enamel composition comprising a glass frit, pigments, and an organic medium.

6. The method as claimed in one of the preceding claims, wherein the sacrificial zone (12) is disposed in line with a camera zone (16).

7. The method as claimed in one of the preceding claims, wherein the sacrificial layer is applied by screen printing, digital printing, by pad printing or by roll coating, curtain coating or spray coating.

8. The method as claimed in the preceding claim, such that the sacrificial layer (22) comprises pigments, in particular black pigments, or carbon black.

9. The method as claimed in one of the preceding claims, such that the sacrificial layer (22) comprises a resin and refractory mineral compounds, the sacrificial layer (22) being removed after the bending step, in particular by washing and/or brushing.

10. The method as claimed in one of claims 1 to 8, such that the sacrificial layer (22) comprises a resin and combustible mineral compounds, the sacrificial layer (22) being removed simultaneously with the bending.

11. The method as claimed in one of the preceding claims, further comprising, before the bending step, a prebaked treatment of the enamel (12).

12. The method as claimed in one of the preceding claims, such that the glazing unit is an automotive windshield.

13. The method as claimed in one of the preceding claims, wherein at least one sensor is disposed on the internal glass sheet opposite an unenameled zone (16) surrounded by a part of the enameled zone (12).

14. The method as claimed in the preceding claim, wherein said at least one sensor is a camera, in particular visible and/or infrared camera, more particularly thermal camera, or a Lidar.
